# EUROPÄISCHE PATENTANMELDUNG

(11) **EP 2 224 167 A1**
(43) Veröffentlichungstag der Anmeldung: **01.09.2010**
(21) Anmeldenummer: 09002697.2
(22) Anmeldetag: 25.02.2009
(51) Int. Cl.: F23R 3/00, F01D 25/24, F02C 7/24, F01D 9/06

(54) **Gehäuse einer Gasturbine**

(71) Anmelder: Siemens Aktiengesellschaft, 80333 München (DE)
(72) Erfinder: Benkler, Francois, Dr., 40880 Ratingen (DE); Böttcher, Andreas, Dr., 40882 Ratingen (DE); Etzold, Tino, 45481 Mülheim (DE); Kiliani, Stefan, Werner, Dr., 45133 Essen (DE); Lohse, Uwe, 42899 Remscheid (DE); Maldfeld, Ekkehard, Dr., 45479 Mülheim an der Ruhr (DE); Meimerstorf, Maximilian, 47551 Bedburg-Hau (DE); Schneider, Oliver, Dr., 46487 Wesel (DE); Sheng, Shilun, Dr., 46149 Oberhausen (DE)

(57) **Zusammenfassung**

Die vorliegende Erfindung betrifft ein Gehäuse einer Gasturbine, welche im Wesentlichen aus mindestens einer Brennkammer mit Schutzschale, der eigentlichen Turbine und einer Abgasstrecke besteht.

Um bei einer derartigen Gasturbine mit herkömmlichen Werkstoffen einen Gasturbinenbetrieb mit den zukünftig höheren Drücken und Temperaturen zu ermöglichen ist die Schutzschale und/oder die Turbinenleitschaufelträgerwand der eigentlichen Turbine und/oder die Gehäusewand der Abgasstrecke jeweils auf ihrer heißen Seite mit einer Wärmedämmschicht versehen.

## Beschreibung

Die vorliegende Erfindung betrifft ein Gehäuse einer Gasturbine, welche im Wesentlichen aus mindestens einer Brennkammer mit Schutzschale, der eigentlichen Turbine und einer Abgasstrecke besteht.

Um die zukünftigen immer höheren Wirkungsgrad-Anforderungen bei Gasturbinen zu erfüllen, werden Gehäusebauteile benötigt, welche immer höhere Drücke und immer höhere Temperaturen aushalten sollen.

Die steigenden Temperaturen und Drücke bei Gasturbinen machen den Einsatz von höherwertigen Werkstoffen in naher Zukunft unvermeidlich. Dies ist einmal mit steigenden Produktionskosten verbunden und zum anderen können sich wegen der Temperaturbeständigkeit Einsatzbeschränkungen ergeben.

Aufgabe der vorliegenden Erfindung ist es, eine Gasturbine der eingangs genannten Art anzugeben, bei welcher mit herkömmlichen Werkstoffen ein Gasturbinenbetrieb mit den zukünftig höheren Drücken und Temperaturen ermöglicht wird.

Diese Aufgabe wird erfindungsgemäß für die eingangs genannte Gasturbine dadurch gelöst, das die Schutzschale und/oder die Turbinenleitschaufelträgerwand der eigentlichen Turbine und/oder die Gehäusewand der Abgasstrecke jeweils auf ihrer heißen Seite mit einer Wärmedämmschicht versehen ist.

Das Prinzip der erfindungsgemäßen Lösung beruht auf der klaren Trennung von Druck- und Temperaturbelastungen. Die Druckbelastung wird von Gehäuseteilen aus kostengünstigen Materialien aufgenommen. Neu dabei ist, dass diese Teile nicht mehr direkt in Kontakt mit der hohen Temperatur stehen, sondern durch eine Wärmedämmschicht von dieser isoliert sind.

Eine einfache Ausgestaltung der erfindungsgemäßen Wärmedämmschicht besteht aus einer wärmedämmenden Pulverbeschichtung. Hierbei handelt es sich um eine einfache kostengünstige Lösung um nur die Temperaturtransienten abzufangen und das Gehäuse vor diesen zu schützen.

Eine andere zweckmäßige Ausgestaltung der erfindungsgemäßen Wärmedämmschicht besteht darin, dass die Wärmedämmschicht aus einer dünnen Wand besteht. Dies bietet den Vorteil einet evtl. längeren Lebensdauer. Bei dieser Ausgestaltung besteht der Großteil des Gehäuses aus üblichem Gussmaterial und es wird nur eine dünne Wand aus einem temperaturfesten Werkstoff, z.B. Inconel, als Schutz direkt angebracht. Diese dünne Wand kann aus Flächensegmenten bestehen, um eine große Einsatzflexibilität zu gewährleisten, je nach Ausführung und/oder Anwendung der Gasturbine.

Weitergehende zweckmäßige Ausgestaltungen der erfindungsgemäßen Wärmedämmschicht sehen vor, dass diese entweder aus CFC-Segmenten, aus CMC-Segmenten oder aus Keramikkacheln besteht.

Damit ist es möglich den Wärmeschutz den jeweiligen Vorgaben genau anzupassen.

Eine zusätzliche zweckmäßige Weiterbildung der erfindungsgemäßen Gasturbine ist **dadurch gekennzeichnet, dass** zwischen der Wärmedämmschicht und den damit versehenen Gehäuseteilen Kanäle für Kühlluft vorgesehen sind.

Auf diese Weise kann der Wärmeschutz für die Gehäuseteile erheblich vergrößert werden.

Weitere zweckmäßige Ausgestaltungen der erfindungsgemäßen Gasturbine ergeben sich aus den Unteransprüchen sowie aus der nachfolgenden Beschreibung mehrerer Ausführungsbeispiele anhand der beigefügten Zeichnungen.

### Es zeigen:

- Figur 1: einen teilweisen schematischen Querschnitt durch eine erste Gasturbine gemäß der vorliegenden Erfindung,
- Figur 2: einen teilweisen schematischen Querschnitt durch ein Turbinenteil einer zweiten gemäß der vorliegenden Erfindung aufgebauten Gasturbine,
- Figur 3: einen teilweisen schematischen Querschnitt durch ein Turbinenteil einer dritten gemäß der vorliegenden Erfindung aufgebauten Gasturbine,
- Figur 4: einen teilweisen schematischen Querschnitt durch ein Turbinenteil einer vierten gemäß der vorliegenden Erfindung aufgebauten Gasturbine mit einer zusätzlichen Luftkühlung,
- Figur 5: einen teilweisen schematischen Querschnitt durch ein Turbinenteil einer fünften gemäß der vorliegenden Erfindung aufgebauten Gasturbine, und
- Figur 6: einen teilweisen schematischen Querschnitt durch ein Turbinenteil einer sechsten gemäß der vorliegenden Erfindung aufgebauten Gasturbine mit einer zusätzlichen Luftkühlung.

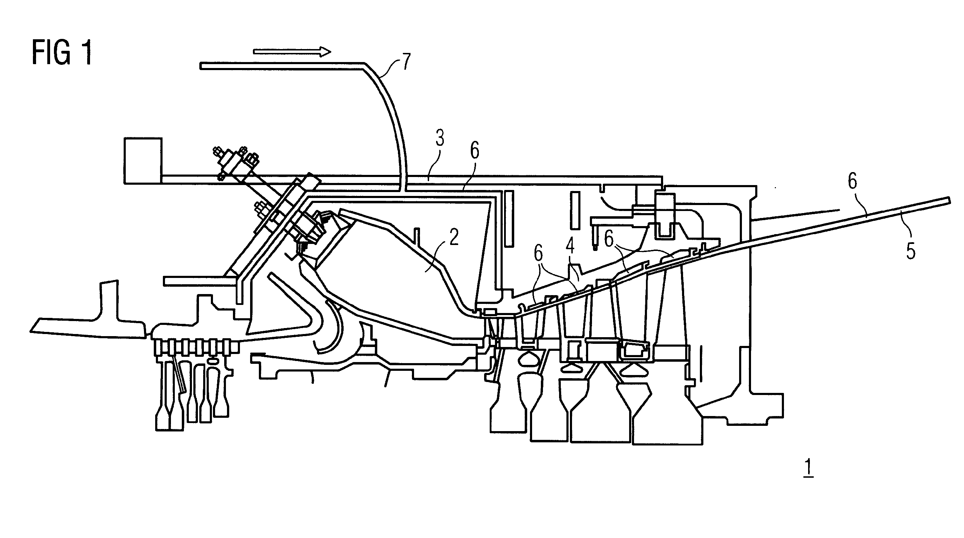

Figur 1 zeigt einen teilweise schematischen Längsschnitt durch eine Gasturbine (1) gemäß der vorliegenden Erfindung. Diese Gasturbine (1) besteht im Wesentlichen aus der Brennkammer (2), den Turbinenleitschaufelträger (4), der Schutzschale (3) und der Abgastrecke (5). Gehäuseteile der Schutzschale 3, der Turbinenleitschaufelträger (4) und der Abgasstrecke (5) sind jeweils zumindest teilweise mit einer Wärmedämmschicht (6) versehen. Zwischen der Wärmedämmschicht (6) und den Gehäuseteilen können Kühlluftkanäle (7) vorgesehen sein.

Aus der Figur 1 ist das Prinzip einer erfindungsgemäßen Gasturbine klar zu erkennen, welches auf einer Trennung der Belastungen Druck und Temperatur beruht. Dabei treten die Gehäuseteile nicht mehr direkt in Kontakt mit der hohen Temperatur, sondern werden durch die Wärmedammschicht (6) isoliert.

Gehäuseteile aus herkömmlichen Gusswerkstoff, welche einer niedrigen Temperatur ausgesetzt sind, können aufgrund der niedrigeren Temperatur höhere Drücke aushalten.

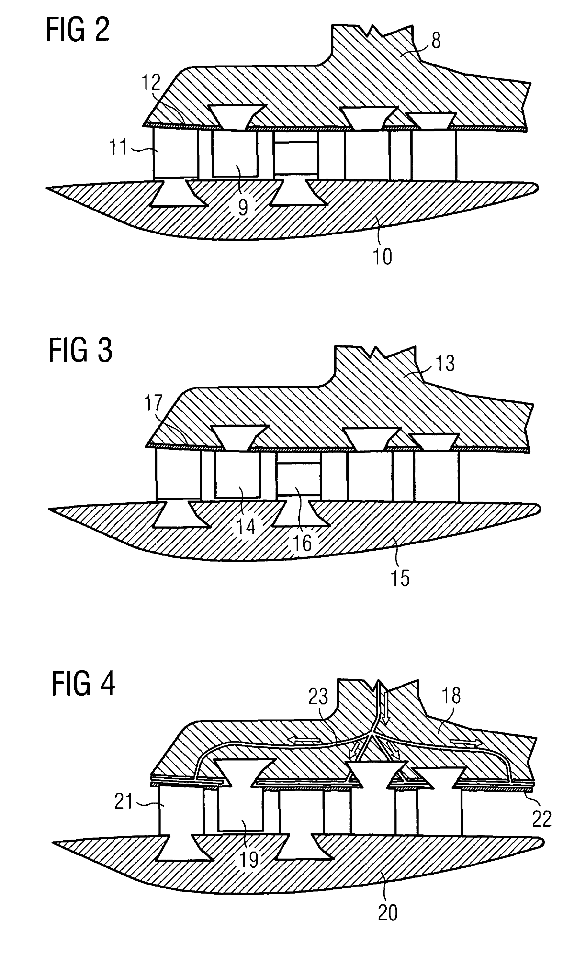

Eine Möglichkeit der Realisierung einer Wärmedämmschicht ist das Auftragen einer Pulverbeschichtung, wie es in Figur 2 dargestellt ist. Figur 2 zeigt einen teilweise geschnittenen schematischen Längsschnitt durch den eigentlichen Turbinenteil einer erfindungsgemäßen Gasturbine, wobei der Rotor (10) und der Leitschaufelträger (8) mit den Laufschaufeln (11) und den Leitschaufeln (9) dargestellt sind. Die dem Reaktionsraum zugewandte Oberfläche des Leitschaufelträgers (8) ist mit einer Pulverbeschichtung (12) versehen.

Hierbei handelt es sich um eine einfach durchzuführende Maßnahme zum Schutz des Leitschaufelträgers (8) vor Überhitzung.

Eine weitere Möglichkeit zur Realisierung einer Wärmedämmschicht besteht darin, dünne Wände aus einem Werkstoff, z.B. Inconel, auf die Gehäuseoberfläche aufzubringen. Dies ist in Figur 3 dargestellt.

Figur 3 zeigt den Leitschaufelträger (13) mit den Leitschaufeln (14) und den Rotor (15) mit den Laufschaufeln (16). Auf die dem Rotor (10) zugewandte Oberfläche des Leitschaufelträgers (13) sind jeweils dünne Wände aus einem wärmefesten Werkstoff aufgebracht. Diese dünnen Wände können als Flächensegment ausgeführt werden, um eine Einsatzflexibilität je nach Ausführung und/oder Gasturbinenanwendung zu gewährleisten.

Figur 4 zeigt einen teilweisen schematischen Längsschnitt durch die eigentliche Turbine mit dem Leitschaufelträger (18), auf welchem die Leitschaufel (19) angebracht sind und den Rotor (20) mit den Laufschaufeln (21). Bei der in Figur 4 gezeigten Ausführungsform befinden sich hinter Wärmedämmschicht (22) Kühlluftkanäle (23). Hierdurch wird ein weiterer Schutz des Leitschaufelträgers (18) gegen Überwärmung aufgebaut.

Durch das Einbringen von Kühlkanälen mittels Fräsen und/oder Kerngusstechniken auf der Innenwand der Gussteile besteht die Möglichkeit, komplexe Kühlkanalgeometrien auf einfache Weise zu erzeugen. Gegenüber einer gegossenen Ausführung werden aufwändige und teure Kerngeometrien vermieden.

Eine weitere Möglichkeit zur Wärmedämmung besteht darin, die Gehäuseteile durch den Einsatz von CMC- oder durch CFC-Elementen vor einer Überhitzung zu schützen. Diese Elemente sind kostengünstig. Darüber hinaus bringen sie den Vorteil mit sich, dass sie eine noch kleinere Dehnungsgeschwindigkeit aufweisen als die Gussteile. Dadurch entsteht bei hoher Belastung und bei hohen Transienten ein Spalt zwischen den Sandwichschichten aus Segmenten aus CMC- bzw. CFC-Elementen, zwischen den Segmenten und ein Medium, wie z.B. Luft, kann problemlos zirkulieren, um die Wärme abzuführen. Dabei würden die Festigkeitscharakteristiken der Gussteile erhalten bleiben.

Eine andere Möglichkeit die Gehäuseteile vor Überhitzung zu schützen besteht darin, keramische Hitzeschilde anzubringen.

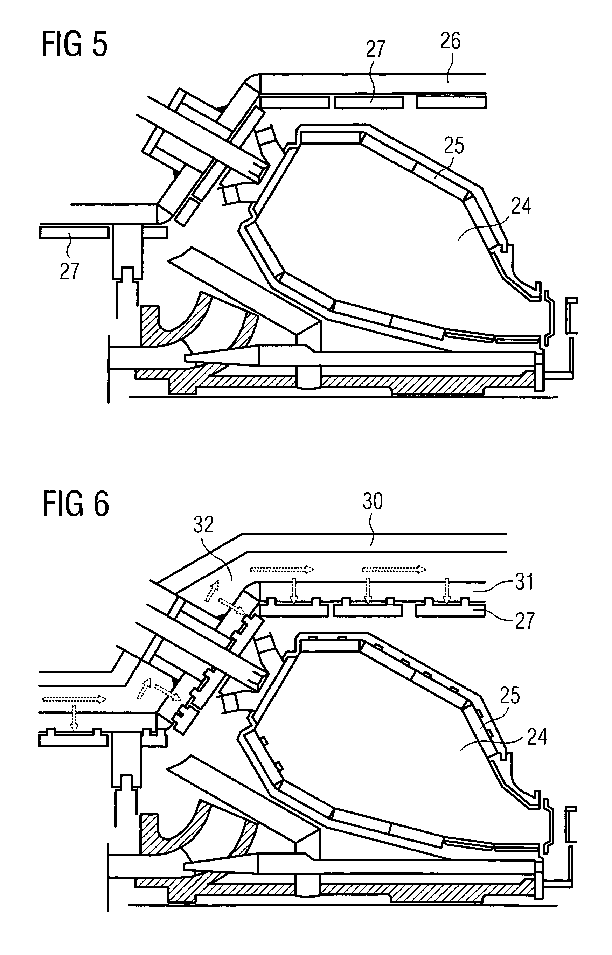

Diese Möglichkeit ist in den Figuren 5 und 6 dargestellt. In diesen Figuren sind die Brennkammer (24) mit ihren keramischen Hitzeschildern (25) sowie die Schutzschale (26), welche die Brennkammer umgibt, dargestellt. Der Schutz der Schutzschale (26) gegen Überhitzung erfolgt bei diesem dargestellten Ausführungsbeispiel mittels Keramikkacheln (27).

Diese Keramikkacheln können entweder auf die Oberfläche der Schutzschale aufgeklebt werden oder aber mit Steinhaltern auf der Oberfläche der Schutzschale angebracht sein.

Auch bei diesem Ausführungsbeispiel können, indem die Schutzschale (26) aus einer inneren Gehäuseschale (31) und einer äußeren Gehäuseschale (30) aufgebaut ist, zwischen diesen beiden Gehäuseschalen Kühlluftkanäle (32) zur weiteren Wärmedämmerung vorgesehen sein.

## Patentansprüche

1. Gehäuse einer Gasturbine, welche im Wesentlichen aus mindestens einer Brennkammer mit Schutzschale, der eigentlichen Turbine und einer Abgasstrecke besteht,
**dadurch gekennzeichnet,**
**dass** das die Schutzschale und/oder die Turbinenleitschaufelträgerwand der eigentlichen Turbine und/oder die Gehäusewand der Abgasstrecke jeweils auf ihrer heißen Seite mit einer Wärmedämmschicht versehen ist.

2. Gasturbine nach Anspruch 1,
**dadurch gekennzeichnet,**
**dass** ein Teil der Wärmedämmschicht oder die gesamte Wärmedämmschicht aus einer Wärmeisolierendenpulverbeschichtung besteht.

3. Gastrubine nach Anspruch 1,
**dadurch gekennzeichnet,**
**dass** ein Teil der Wärmedämmschicht oder die gesamte Wärmedämmschicht aus einer dünnen Wand aus einem Nickelbasiswerkstoff besteht.

4. Gasturbine nach Anspruch 1,
**dadurch gekennzeichnet,**
**dass** ein Teil der Wärmedämmschicht oder die gesamte Wärmedämmschicht aus CFC-Segmenten besteht.

5. Gasturbine nach Anspruch 1,
**dadurch gekennzeichnet,**
**dass** ein Teil der Wärmedämmschicht oder die gesamte Wärmedämmschicht aus CMC-Segmenten besteht.

6. Gasturbine nach Anspruch 1,
**dadurch gekennzeichnet,**
**dass** ein Teil der Wärmedämmschicht aus Keramikkacheln besteht.

7. Gasturbine nach einem der vorhergehenden Ansprüche,
**dadurch gekennzeichnet,**
**dass** zwischen der Wärmedämmschicht und den damit versehenden Gehäuseteilen Kanäle für Kühlluft vorgesehen sind.
